# EUROPEAN PATENT APPLICATION

(11) **EP 4 787 807 A1**
(43) Date of publication of application: **05.08.2026**
(21) Application number: 24871319.0
(22) Date of filing: 15.03.2024
(51) Int. Cl.: H04L 45/74

(54) **COMMUNICATION SYSTEM, ROUTER, PROGRAM, AND COMMUNICATION MANAGEMENT METHOD**

(30) Priority: 26.09.2023 JP 2023164042
(71) Applicant: Softbank Corp., Tokyo 105-7529 (JP)
(72) Inventor: MATSUSHIMA Satoru, Tokyo 105-7529 (JP); KAWAKAMI Yuya, Tokyo 105-7529 (JP)
(74) Representative: Dilg, Haeusler, Schindelmann Patentanwaltsgesellschaft mbH
(86) International application number: PCT/JP2024/010361
(87) International publication number: WO 2025/069503

(57) **Abstract**

There is provided a communication system in which a first router has a table storage unit which stores a correspondence table of an IP prefix of a network under the first router and an SRv6 SID that corresponds to the IP prefix and that has a Locator+Function length shorter than an IP prefix length, a second router has an SID generation unit which generates an SID including a part of an address of a destination located under the first router, and header information, and a packet transmission unit which transmits, to the first router, an SRv6 packet including the SID, and the first router has a packet generation unit which refers to the correspondence table and identifies an IP prefix corresponding to the SID included in the SRv6 packet, when the SRv6 packet is received from the second router, and identifies the address of the destination by using the IP prefix and a part of the address of the destination included in the SID, to generate a packet by using the identified address and the header information.

## Description

### TECHNICAL FIELD

The present invention relates to a communication system, a router, a program, and a communication management method.

### BACKGROUND ART

Patent Document 1 discloses a transfer apparatus which performs transfer processing by using protocols such as SRv6 (Segment Routing IPv6) and SR-MPLS (Multi-Protocol Label Switching).

### RELATED ART DOCUMENTS

### PATENT DOCUMENTS

Patent Document 1: Japanese Patent Application Publication No. 2020-174231

### GENERAL DISCLOSURE

According to one aspect of the present invention, there is provided a communication system. The communication system may include a first router and a second router. The first router may have a table storage unit which stores a correspondence table of an IP prefix of a network under the first router and an SRv6 SID that corresponds to the IP prefix and that has a Locator+Function length shorter than an IP prefix length. The second router may have an SID generation unit which generates an SID including a part of an address of a destination located under the first router, and header information of a packet that is transmitted to the destination. The second router may have a packet transmission unit which transmits, to the first router, an SRv6 packet including the SID generated by the SID generation unit. The first router may have a packet generation unit which refers to the correspondence table and identifies an IP prefix corresponding to the SID included in the SRv6 packet, when the SRv6 packet is received from the second router, and identifies the address of the destination by using the IP prefix that is identified and a part of the address of the destination included in the SID, to generate a packet that is transmitted to the destination by using the address that is identified and the header information included in the SID.

In the communication system, the first router may be a PE router which converts the SRv6 packet compliant with SRv6 into a GTP-U packet compliant with GTP-U, the table storage unit may store the correspondence table of an IP prefix of an RAN under the first router and the SRv6 SID, the second router may have a route information receiving unit which receives a UE route information that is advertised by a controller and that includes a gNB address of a gNB to which a UE is connected, the SID generation unit may generate the SID including a part of the gNB address, and the header information, and the packet generation unit may identify the gNB address by using the IP prefix corresponding to the SID included in the SRv6 packet, and a part of the gNB address included in the SID, and generate a GTP-U packet that is transmitted to the gNB by using the gNB address that is identified and the header information. The SID generation unit may generate the SID including a part of the gNB address, and the header information that includes a TEID, a QFI, and an RQI and that is included in the UE route information, and the packet generation unit may generate the GTP-U packet by using the gNB address that is identified, and the TEID, the QFI, and the RQI that are included in the header information. The packet generation unit may generate the GTP-U packet by setting the gNB address that is identified, as a destination address, and setting the TEID, the QFI, and the RQI that are included in the header information. The first router may have an advertisement unit which advertises an ISD ( Interwork Segment Discovery) route, the ISD route may indicate GTP6.E.Reduced as an SID Behavior in a BGP attribute that stores an SRv6 SID, and when a prefix length of an actual RAN IP prefix including the IP prefix corresponding to the SID, is shorter than the SID Locator+Function length by less than an Arg.Mob.Session length, the second router may store, in NLRI, an IP prefix that has a same length as a sum of the Locator+Function length of the SID and the Arg.Mob.Session length and that includes a stuffing field for embedding an Arg.Mob.Session in the SID, when the gNB address included in the UE route information is included in an IP prefix that includes the stuffing field and that is stored in the NLRI of the ISD route received from the first router, and a Behavior of the SRv6 SID indicates GTP6.E.Reduced, the SID generation unit may store, in an Argument field in the SID, the Arg.Mob.Session composed of the header information that includes the TEID, the QFI, and the RQI and that is included in the UE route information, and store, in remaining Argument bits, a value of the gNB address at same bit positions as those of the remaining bits, to generate the SID, and when the SRv6 packet having a GTP6.E.Reduced SID as an active SID is received, the packet generation unit may acquire the Arg.Mob.Session from the SID, and identify the gNB address from the IP prefix including the stuffing field and the value of the gNB address at the same bit positions as those of the remaining bits, to acquire the TEID, the QFI, and the RQI from the Arg.Mob.Session. The first router may include a table management unit which deletes a pair of an RAN IP Prefix and the corresponding SRv6 SID from the correspondence table, when a route having a destination prefix that includes the RAN IP Prefix having the stuffing field for embedding the Arg.Mob.Session is lost from a VRF connected to the gNB, or when reachability to the IP Prefix is lost, and when the pair of the RAN IP Prefix and the corresponding SRv6 SID is deleted from the correspondence table, the advertisement unit may issue a route withdrawal advertisement of an ISD route having the RAN IP Prefix in the NLRI. In any of the communication systems, the first router may further include a table registration unit which uses configuration information for specifying one or more destination prefixes from route information registered in a VRF connected to the gNB, and a Locator+Function length of the SRv6 SID set in the first router, and automatically generates, as IP prefixes that are registered in the correspondence table, one or more IP prefixes longer than the Locator+Function length of the SRv6 SID by an Arg.Mob.Session length, to automatically generate the SRv6 SID corresponding to each automatically generated IP prefix, for registering in the correspondence table. The communication system may further include the controller.

According to one aspect of the present invention, there is provided a router. The router may include a table storage unit which stores a correspondence table of an IP prefix of a network under the router and an SRv6 SID that corresponds to the IP prefix and that has a Locator+Function length shorter than an IP prefix length. The router may include a packet generation unit which refers to the correspondence table when an SRv6 packet is received from another router, the SRv6 packet including an SID including a part of an address of a destination located under the router, and header information of a packet that is transmitted to the destination, and identifies the address of the destination by using an IP prefix corresponding to the SID included in the SRv6 packet and a part of the address of the destination included in the SID, to generate a packet that is transmitted to the destination by using the address that is identified and the header information included in the SID.

According to one aspect of the present invention, there is provided a program for causing a computer to function as the router.

According to one aspect of the present invention, there is provided a communication management method which is executed by a router. The communication management method may include storing, in a table storage unit, a correspondence table of an IP prefix of a network under the router and an SRv6 SID that corresponds to the IP prefix and that has a Locator+Function length shorter than an IP prefix length. The communication management method may include performing packet generation by referring to the correspondence table when an SRv6 packet is received from another router, the SRv6 packet including an SID including a part of an address of a destination located under the router, and header information of a packet that is transmitted to the destination, and identifying the address of the destination by using an IP prefix corresponding to the SID included in the SRv6 packet and a part of the address of the destination included in the SID, to generate a packet that is transmitted to the destination by using the address that is identified and the header information included in the SID.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of a configuration of a communication system 10.
Fig. 2 is an Illustrative diagram for schematically describing a processing flow in the communication system 10.
Fig. 3 is an Illustrative diagram for describing an example of a GTP6.E.Reduced SID.
Fig. 4 is an Illustrative diagram for describing the GTP6.E.Reduced SID.
Fig. 5 is an Illustrative diagram for describing the GTP6.E.Reduced SID.
Fig. 6 schematically shows an example of a functional configuration of a conversion unit 450.
Fig. 7 schematically shows an example of a functional configuration of a PE router 220.
Fig. 8 schematically shows an example of a hardware configuration of a computer 1200 which functions as an SRGW 400, the PE router 220, or an N4BGPC 300.

### DESCRIPTION OF EXEMPLARY EMBODIMENTS

The present invention will be described below through embodiments of the invention, but the following embodiments do not limit the invention according to the claims. Further, not all of combinations of features described in the embodiments are essential to the solving means of the invention.

In a mobile network using SRv6, a function called End.M.GTP6.E is known to convert an SRv6 packet compliant with SRv6 into a GTP-U packet compliant with GTP-U (GPRS Tunneling Protocol for User Plane). End.M.GTP6.E can, for example, convert a header of a packet from SRv6 to GTP-U/IPv6 by using a gNB (gNodeB) address stored in a LastSID (Segment ID) of an SRH (SR Header). However, depending on the limitation of the hardware capability of a PE (Provider Edge) router which implements End.M.GTP6.E, it may be difficult to extract the gNB address stored in the LastSID of the SRH, and it may not be possible to construct a destination IPv6 address of the GTP-U packet.

In contrast to this, in one embodiment of a communication system 10 according to the present embodiment, for example, a function is provided to be able to achieve, by only a single SID, restoration of: all bits of a gNB address that is a destination after GTP-U conversion; and a TEID (Tunnel Endpoint Identifier), a QFI (QoS Flow Identifier), and an RQI (Reflective QoS Indication) of a GTP-U header. Such a function may be referred to as End.M.GTP6.E.Reduced (when abbreviated, as GTP6.E.Red). With GTP6.E.Red, it is possible to reduce the limitation on the hardware capability for implementation. This makes it possible to contribute to achieving packet conversion from SRv6 to GTP-U on a wider range of hardware.

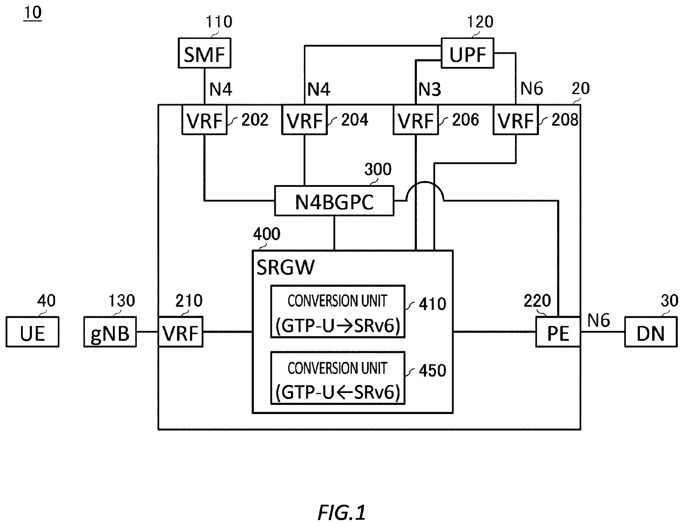

Fig. 1 schematically shows an example of a configuration of a communication system 10. The communication system 10 includes an SRGW (Segment Routing Gateway) 400. The SRGW 400 may also be referred to as the PE (Provider Edge) router. The SRGW 400 may be an example of a first router. The communication system 10 may include a PE router 220. The PE router 220 may be an example of a second router. The communication system 10 may include an N4BGPC (N4 Border Gateway Protocol Controller) 300. The N4BGPC 300 may be an example of a controller. The SRGW 400, the PE router 220, and the N4BGPC 300 may be arranged in an SRNW (Segment Routing Network) 20.

The SRGW 400 may have a function of converting the SRv6 packet that is received from an IP network and that is compliant with SRv6, into the GTP-U packet that is compliant with GTP-U. The SRGW 400 may have a function of converting the GTP-U packet that is received from a mobile network and that is compliant with GTP-U, into the SRv6 packet that is compliant with SRv6.

The N4BGPC 300 executes processing related to a route control. The N4BGPC 300 may provide an instruction related to the route control to the SRGW 400. The N4BGPC 300 may provide an instruction related the route control to the PE router 220.

In the example shown in Fig. 1, VRF (Virtual Routing and Forwarding) 202, VRF 204, VRF 206, and VRF 208 are arranged in the SRNW 20. It should be noted that illustration of a router in which each VRF is implemented is omitted. The SRGW 400 may include a VRF 210.

The VRF 202 is connected to an SMF (Session Management Function) 110. The VRF 204, the VRF 206, and the VRF 208 are connected to a UPF (User Plane Function) 120. The VRF 210 is connected to a gNB 130. The VRF 210 may be connected to the gNB 130 via a switch or a router. In Fig. 1, one VRF 210, one gNB 130, and one UE 40 are illustrated; however, the numbers of VRFs 210, gNBs 130, and UEs 40 are not limited thereto.

The N4BGPC 300 acquires information related to the mobile network from the SMF 110. The N4BGPC 300 acquires, for example, PFCP (Packet Forwarding Control Protocol) session information of the UE 40 from the SMF 110.

The PFCP session information includes, for example, an address of the UE 40. The PFCP session information includes, for example, an address of the gNB 130 accommodating the UE 40. The PFCP session information includes, for example, an address of the UPF 120 corresponding to the UE 40. The PFCP session information includes, for example, a network instance corresponding to the UE 40. The network instance is information corresponding to slice identification information for enabling identification of a slice corresponding to the UE 40 in the mobile network, for example, as an access network instance. The slice identification information is, for example, S-NSSAI (Single-Network Slice Selection Assistance Information). The PFCP session information may include the access network instance. The PFCP session information may include a core network instance. The core network instance is, for example, information corresponding to DN identification information for enabling identification of a DN.

The SRGW 400 includes a conversion unit 410 and a conversion unit 450. The conversion unit 410 has a function of converting a packet compliant with GTP-U into the SRv6 packet compliant with SRv6. The conversion unit 410 may have a function of GTP4.D. The conversion unit 410 may have a function of GTP6.D.

The conversion unit 450 has a function of converting a packet compliant with SRv6 into the GTP-U packet compliant with GTP-U. The conversion unit 450 may have a function of GTP4.E. The conversion unit 450 may have a function of GTP6.E. In the present embodiment, the conversion unit 450 may function as GTP6.E.Red.

In the present embodiment, the N4BGPC 300 executes route setting for relaying communication between the UE (User Equipment) 40 connected to the gNB 130 and a communication partner connected to a DN 30. The communication partner of the UE 40 may be, for example, any communication apparatus such as any server on the Internet.

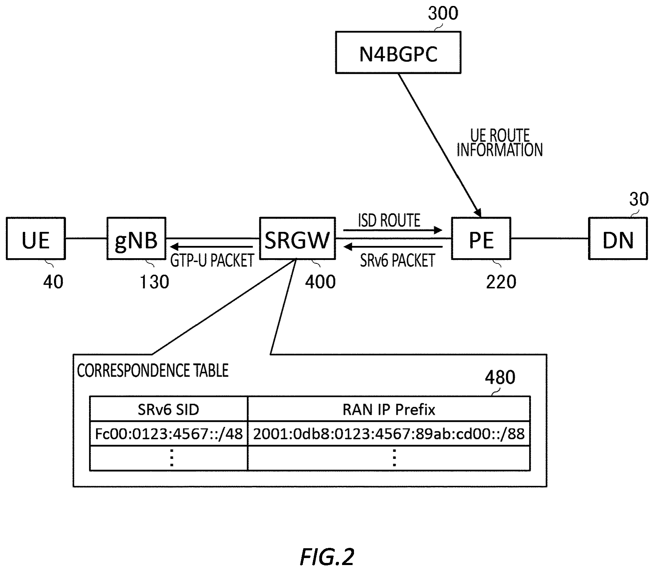

Fig. 2 is an Illustrative diagram for schematically describing a processing flow in the communication system 10. Here, an example of a processing flow after the N4BGPC 300 transmits UE route information of the UE 40 to the PE router 220, with SRGW 400 storing a correspondence table 480, will be described.

In the correspondence table 480, an IP prefix of an RAN (Radio Access Network) under the SRGW 400 and an SRv6 SID that corresponds to the IP prefix and that has a Locator+Function length shorter than an IP prefix length, are registered. The correspondence table 480 may include a plurality of combinations of the IP prefix and the SRv6 SID.

As an example, when a terminal address is 2001:0db8:0123:4567:89ab:cdef:0123:4567 and a network to which the terminal is connected is 2001:0db8:0123:4567::/64, normally, 2001:0db8:0123:4567::/64 is advertised to the network. However, in the communication system 10 according to the present embodiment, when the Locator+Function length of the SRv6 SID of the SRGW 400 is 48 bits, a configuration is made to advertise 2001:0db8:0123:4567:89ab:cd00::/88. Then, as illustrated in Fig. 2, for the RAN IP prefix of 2001:0db8:0123:4567:89ab:cd00::/88, as a Locator+Function of the SRv6 SID, fc00:0123:4567::/48 having a 48-bit length is registered in the correspondence table 480. In this manner, when the SRv6 SID of fc00:0123:4567::/48 is received, the SRGW 400 can extract 2001:0db8:0123:4567:89ab:cd00::/88, by referring to the correspondence table 480. In this example, in order to restore the terminal address, it is necessary to include the last 40 bits of the terminal address in the SRv6 SID; however, it is possible to freely use portions other than that.

As in this example, the IP prefix that is registered in the correspondence table 480 may be registered with a prefix length longer than that of the IP prefix of the network to which the gNB 130 is connected. The IP prefix that is registered in the correspondence table 480 and the corresponding SRv6 SID may be manually set by an administrator. Alternatively, the setting may be made from the outside. The SRGW 400 may automatically generate the IP prefix that is registered in the correspondence table 480 and the corresponding SRv6 SID. The SRGW 400 may use configuration information for specifying one or more destination prefixes from the route information registered in the VRF 210, and the Locator+Function length of the SRv6 SID set in the SRGW 400, and automatically generate, as the IP prefixes that are registered in the correspondence table 480, one or more IP prefixes longer than the Locator+Function length of the SRv6 SID by an Arg.Mob.Session length. The SRGW 400 may automatically generate the SRv6 SID corresponding to each automatically generated IP prefix, for registering in the correspondence table 480.

In the present example, first, the SRGW 400 advertises a BGP-MUP SAFI Interwork Segment Discovery Route (which may be referred to as an ISD route). The ISD route may indicate GTP6.E.Reduced as an SID Behavior for the SRv6 SID stored in a BGP attribute that stores the SRv6 SID, and when the actual RAN IP prefix length including the RAN IP prefix corresponding to the SID is shorter than the SID Locactor+Function length by less than the Arg.Mob.Session length, an RAN IP prefix that has the same length as a Locator+Function+Arg.Mob.Session length of the SID and that includes a stuffing field for embedding an Arg.Mob.Session, may be stored in NLRI.

When a route having a destination prefix that includes the RAN IP Prefix having the stuffing field for embedding the Arg.Mob.Session is lost from the VRF 210, or when reachability to the IP Prefix is lost, the SRGW 400 may delete a pair of the RAN IP Prefix and the corresponding SRv6 SID from the correspondence table 480 and issue a route withdrawal advertisement (withdraw) of the ISD route having the RAN IP Prefix in the NLRI.

When the gNB address included in the UE route information received from the N4BGPC 300 is included in an IP prefix that includes the stuffing field and that is stored in the NLRI of the ISD route received from the SRGW 400, and the SRv6 SID indicates GTP6.E.Reduced as the Behavior, the PE router 220 stores, in an Argument field in the SID, the Arg.Mob.Session composed of the TEID, the QFI, and the RQI that are included in the UE route information received from the N4BGPC 300, and when there are remaining Argument bits, the PE router 220 stores a value of the gNB address at the same bit positions as those of the remaining bits, to generate a GTP6.E.Reduced SID for transmitting a packet destined for the UE 40 to the SRGW 400. When the gNB address included in the UE route information received from the N4BGPC 300 is not included in the IP prefix stored in the NLRI of the ISD route that is received from the SRGW 400 and that includes the stuffing field, the GTP6.E. Reduced SID is not generated by using the SRv6 SID of the ISD route.

When the SRv6 packet having the GTP6.E.Reduced SID as an active SID is received from the PE router 220, the SRGW 400 acquires the Arg.Mob.Session from the SID, acquires the complete gNB address from the RAN IP prefix that corresponds to the SID and that includes the value of the stuffing field for embedding the Arg.Mob.Session, and from the value of the gNB address at the same bit positions as those of the remaining bits, and sets the gNB address as a destination address of the GTP-U packet, and acquires the values of the TEID, the QFI, and the RQI from the Arg.Mob.Session, to generate the GTP-U packet for transmitting toward the gNB 130.

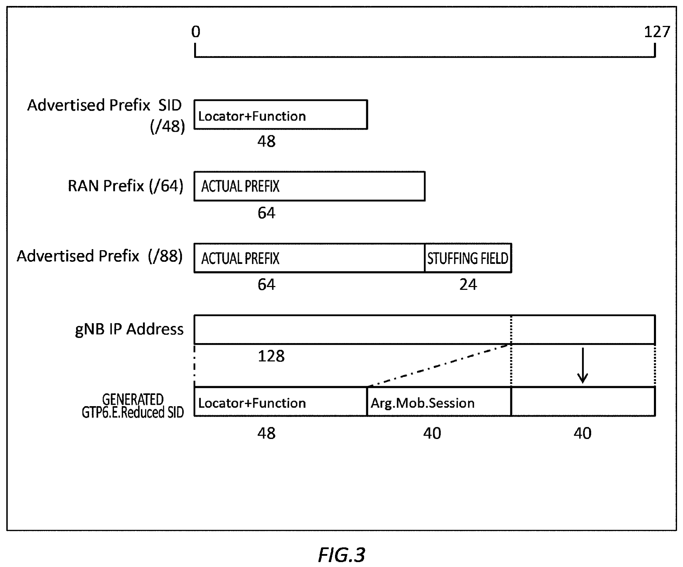

Fig. 3 is an Illustrative diagram for describing an example of a GTP6.E.Reduced SID. The conversion unit 450 of the SRGW 400 needs to extract a 128-bit gNB address and a 40-bit GTP-U packet parameter from one 128-bit SID in order to convert the SRv6 packet into the GTP-U packet; however, the total is 168 bits, and thus cannot be directly included in the 128-bit SID. Therefore, in the communication system 10 according to the present embodiment, the correspondence table 480 is used.

Normally, the prefix length of IPv6 is 64 bits, and under normal circumstances, a 64-bit prefix (the actual prefix) is advertised. In contrast to that, in the communication system 10, when the Locator+Function length of the GTP6.E.Reduced SID is 48 bits, the advertisement is made to include a 24-bit stuffing field for the actual prefix such that a 40-bit Arg.Mob.Session is able to be extracted later.

The PE router 220 generates the GTP6.E.Reduced SID in which the 40-bit Arg.Mob.Session and the lower 40 bits of the gNB address included in the UE route information are stored in an 80-bit Argument field. The PE router 220 includes, in the Arg.Mob.Session, the TEID, the QFI, and the RQI that are included in the UE route information received from the N4BGPC 300.

As indicated by the dash-single dotted line in Fig. 3, the upper 88 bits of the gNB address can be acquired by referring to the correspondence table 480 based on the Locator+Function of the GTP6.E.Reduced SID. The lower 40 bits of the gNB address are stored at the end of the GTP6.E.Reduced SID, and thus the conversion unit 450 can acquire the 128-bit gNB address by these. In addition to this, the conversion unit 450 can also acquire the information of the Arg.Mob.Session. The conversion unit 450 can generate the GTP-U packet by setting the acquired 128-bit gNB address as the destination address and by setting the TEID, the QFI, and the RQI that are acquired from the Arg.Mob.Session.

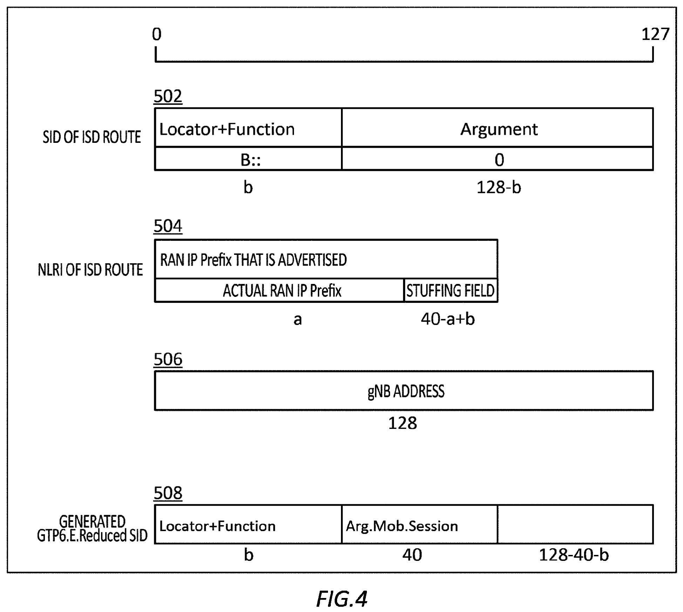

Fig. 4 is an Illustrative diagram for schematically describing the GTP6.E.Reduced SID. Here, a case where the stuffing field is included in the NLRI of the ISD route will be described.

When the size of the Locator+Function of an SID 502 of the ISD route is b, the size of the Argument becomes 128 - b. When the RAN IP prefix length corresponding to the SID is set as a, the conversion unit 450 stores, in the ISD route, an RAN IP prefix 504 that has the same length as the Locator+Function+Arg.Mob.Session length of an SID 508 (that is, b + 40) and that includes the stuffing field (40 - a + b) for embedding the Arg.Mob.Session in the NLRI.

When the gNB address included in the UE route information received from the N4BGPC 300 is included in the IP prefix that is stored in the NLRI of the ISD route received from the SRGW 400 and that includes the stuffing field, the PE router 220 stores, in the Argument field, the Arg.Mob.Session composed of the TEID, the QFI, and the RQI that are included in the UE route information received from the N4BGPC 300, and stores, in the remaining bits (128 - 40 - b), the value of a gNB address 506 at the same bit positions as those of the remaining bits, to generate the SID 508.

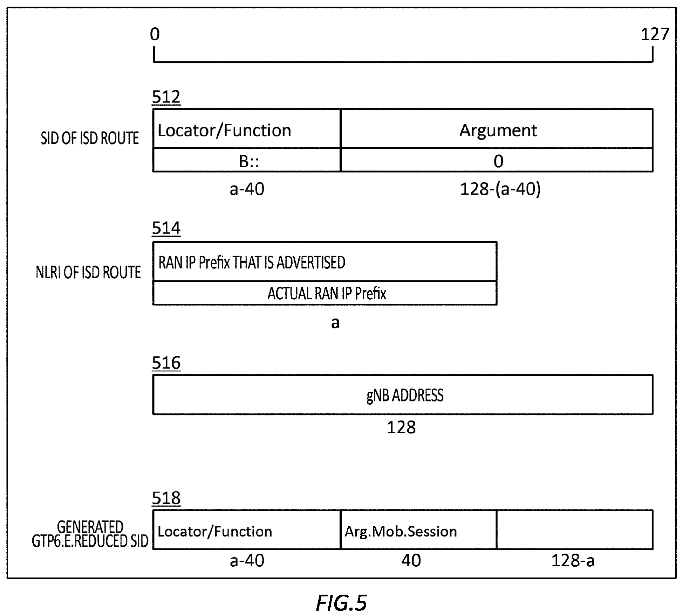

Fig. 5 is an Illustrative diagram for schematically describing the GTP6.E.Reduced SID. Here, a case where the stuffing field is not included in the NLRI of the ISD route will be described. When the size of the Argument is secured, it is no longer necessary to include the stuffing field.

In the example shown in Fig. 5, the RAN IP prefix length corresponding to the SID is the a, the size of the Locator+Function of an SID 512 of the ISD route is a - 40, the size of the Argument is 128 - (a - 40), the size of the Locator+Function of an SID 518 is a - 40, the size of the Arg.Mob.Session is 40, the stuffing field becomes 40 - a +(a - 40) = 0, and the stuffing field is not necessary.

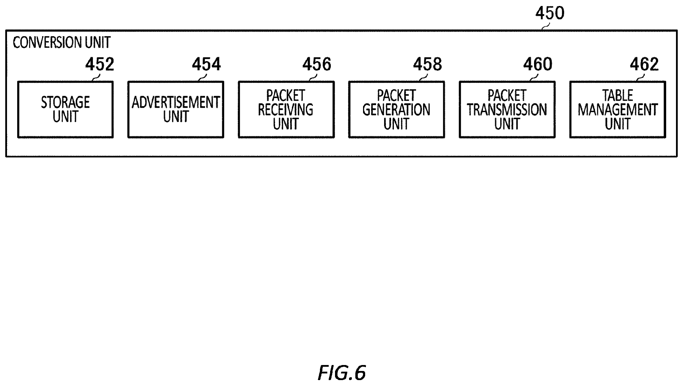

Fig. 6 schematically shows an example of a functional configuration of the conversion unit 450. The conversion unit 450 includes a storage unit 452, an advertisement unit 454, a packet receiving unit 456, a packet generation unit 458, a packet transmission unit 460, and a table management unit 462. It is not necessarily essential for the conversion unit 450 to include all of these.

The storage unit 452 stores various types of information. The storage unit 452 stores the correspondence table 480 of the IP prefix of the network under the SRGW 400 and the SRv6 SID that corresponds to the IP prefix and that has a Locator+Function length shorter than the IP prefix length. The storage unit 452 may store the correspondence table 480 of the IP prefix of the RAN under the SRGW 400 and the SRv6 SID that corresponds to the IP prefix and that is shorter than the IP prefix length. The storage unit 452 may be an example of the table storage unit.

The advertisement unit 454 advertises the ISD route of BGP-MUP SAFI. The ISD route may indicate GTP6.E.Reduced as an SID Behavior for the SRv6 SID stored in a BGP attribute that stores the SRv6 SID, and when the actual IP prefix length including the IP prefix corresponding to the SID is shorter than the SID Locator+Function length by less than the Arg.Mob.Session length, the IP prefix that has the same length as the Locator+Function length+Arg.Mob.Session length of the SID and that includes a stuffing field for embedding an Arg.Mob.Session, may be stored in NLRI.

The packet receiving unit 456 receives the SRv6 packet from the PE router 220. For example, the packet receiving unit 456 receives, from the PE router 220, the SRv6 packet that is generated by the PE router 220 and that has the SID including a part of the address of the destination located under the SRGW 400, and header information of the packet that is transmitted to the destination.

When the packet receiving unit 456 receives the SRv6 packet from the PE router 220, the packet generation unit 458 refers to the correspondence table 480 stored in the storage unit 452, and identifies an IP prefix corresponding to the SID included in the SRv6 packet. The packet generation unit 458 identifies the address of the destination by using the IP prefix that is identified and a part of the address of the destination included in the SID included in the SRv6 packet. The packet generation unit 458 generates the packet that is transmitted to the destination by using the address that is identified and the header information included in the SID included in the SRv6 packet.

In addition, for example, the packet receiving unit 456 receives, from the PE router 220, the SRv6 packet that is generated by the PE router 220 and that has the SID including a part of the gNB address of the gNB 130 to which the UE 40 is connected, and the header information. The packet generation unit 458 may identify the gNB address by using the IP prefix corresponding to the SID included in the SRv6 packet, and a part of the gNB address included in the SID included in the SRv6 packet. The packet generation unit 458 may generate the GTP-U packet that is transmitted to the gNB by using the gNB address that is identified and the header information. The packet generation unit 458 may generate the GTP-U packet by using the gNB address that is identified, and the TEID, the QFI, and the RQI that are included in the header information. The packet generation unit 458 may generate the GTP-U packet by setting the gNB address that is identified, as the destination address, and setting the TEID, the QFI, and the RQI that are included in the header information.

The packet transmission unit 460 transmits the packet generated by the packet generation unit 458. The packet transmission unit 460 transmits the GTP-U packet generated by the packet generation unit 458.

When a route having a destination prefix that includes the RAN IP Prefix having the stuffing field for embedding the Arg.Mob.Session is lost from the VRF 210 connected to the gNB 130, or when reachability to the IP Prefix is lost, the table management unit 462 may delete a pair of the RAN IP Prefix and the corresponding SRv6 SID from the correspondence table 480. When the pair of the RAN IP Prefix and the corresponding SRv6 SID is deleted from the correspondence table 480, the advertisement unit 454 may issue a route withdrawal advertisement of the ISD route having the RAN IP Prefix in the NLRI.

The table management unit 462 may execute the registration to the correspondence table 480. For example, the table management unit 462 may use configuration information for specifying one or more destination prefixes from the route information registered in the VRF 210 connected to the gNB 130, and the Locator+Function length of the SRv6 SID set in the SRGW 400, and automatically generate, as the IP prefixes that are registered in the correspondence table 480, one or more IP prefixes longer than the Locator+Function length of the SRv6 SID by an Arg.Mob.Session length. The table management unit 462 may automatically generate the SRv6 SID corresponding to each automatically generated IP prefix, for registering in the correspondence table 480.

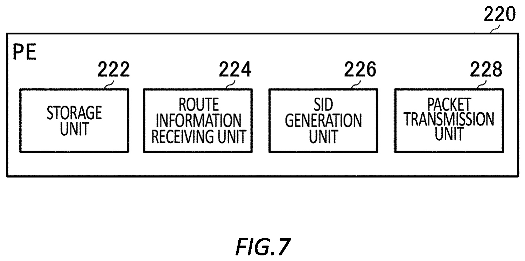

Fig. 7 schematically shows an example of a functional configuration of the PE router 220. The PE router 220 includes a storage unit 222, a route information receiving unit 224, an SID generation unit 226, and a packet transmission unit 228.

The route information receiving unit 224 receives the UE route information of the UE 40. The route information receiving unit 224 receives, for example, the UE route information that is advertised by the N4BGPC 300 and that includes the gNB address of the gNB to which the UE 40 is connected. The route information receiving unit 224 causes the received UE route information to be stored in the storage unit 222.

The route information receiving unit 224 receives the ISD route from the SRGW 400. The route information receiving unit 224 causes the received ISD route to be stored in the storage unit 222.

The SID generation unit 226 generates the SID including a part of the address of the destination located under the SRGW 400, and the header information of the packet that is transmitted to the destination. The SID generation unit 226 generates the SID including a part of the gNB address that is the destination, and the header information that includes the TEID, the QFI, and the RQI and that is included in the UE route information received by the route information receiving unit 224. When the IP prefix of the ISD route received from the SRGW 400 completely matches the gNB address included in the UE route information, the generated SID does not need to include a part of the gNB address.

When a Behavior of the SRv6 SID of the ISD route received by the route information receiving unit 224 from the SRGW 400 indicates GTP6.E.Reduced, the SID generation unit 226 may store the Arg.Mob.Session in the Argument field in the SID, and store the value of the gNB address at the same bit positions as those of the remaining bits, in the remaining Argument bits, to generate the SID. The Arg.Mob.Session may be composed of the header information that includes the TEID, the QFI, and the RQI and that is included in the UE route information. When the packet receiving unit 456 receives the SRv6 packet having the GTP6.E.Reduced SID as the active SID, the packet generation unit 458 of the conversion unit 450 may acquire the Arg.Mob.Session from the SID, and identify the gNB address from the IP prefix including the stuffing field and the value of the gNB address at the same bit positions as those of the remaining bits, to acquire the TEID, the QFI, and the RQI from the Arg.Mob.Session.

The packet transmission unit 228 transmits the SRv6 packet including the SID generated by the SID generation unit 226. The packet transmission unit 228 transmits the SRv6 packet to the SRGW 400.

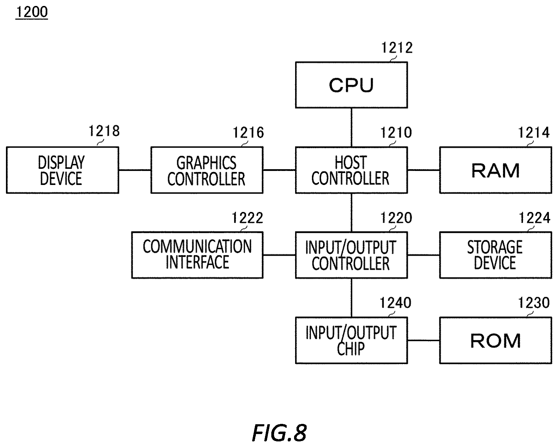

Fig. 8 schematically shows an example of a hardware configuration of a computer 1200 which functions as the SRGW 400, the PE router 220, or the N4BGPC 300. A program installed in the computer 1200 can cause the computer 1200 to function as one or more "units" of an apparatus according to the present embodiment, or cause the computer 1200 to perform operations associated with the apparatus or perform the one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes a communication interface 1222, a storage device 1224, and input/output units such as a DVD drive and an IC card drive, which are connected to the host controller 1210 via an input/output controller 1220. The DVD drive may be a DVD-ROM drive, a DVD-RAM drive, etc. The storage device 1224 may be a hard disk drive, a solid-state drive, and the like. The computer 1200 also includes a ROM 1230, and a legacy input/output unit such as a keyboard, which are connected to the input/output controller 1220 via an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive reads the program or the data from the DVD-ROM or the like, and provides the storage device 1224 with the program or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM or the IC card. The program is read from the computer-readable storage medium, installed into the storage device 1224, the RAM 1214, or the ROM 1230, which are also examples of the computer-readable storage medium, and executed by the CPU 1212. Information processing written in these programs is read by the computer 1200, and provides cooperation between the programs and the various types of hardware resources described above. An apparatus or method may be constituted by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network, or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby acquiring the attribute value of the second attribute associated with the first attribute that satisfies a predetermined condition.

The program or software module described above may be stored in the computer-readable storage medium on the computer 1200 or near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent steps of processes in which operations are executed or "units" of apparatuses responsible for executing operations. A specific step and "unit" may be implemented by a dedicated circuit, a programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon comprises a product including an instruction that may be executed in order to provide means for executing an operation designated by a flowchart or a block diagram. An example of the computer-readable storage medium may include an electronic storage medium, a magnetic storage medium, an optical storage medium, an electromagnetic storage medium, a semiconductor storage medium, etc. A more specific example of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disc (DVD), a Blu-ray (registered trademark) disc, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of a source code or an object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the embodiments of the present invention have been described, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: communication system; 20: SRNW; 30: DN; 40: UE; 110: SMF; 120: UPF; 130: gNB; 202, 204, 206, 208, 210: VRF; 220: PE router; 222: storage unit; 224: route information receiving unit; 226: SID generation unit; 228: packet transmission unit; 300: N4BGPC; 400: SRGW; 410: conversion unit; 450: conversion unit; 452: storage unit; 454: advertisement unit; 456: packet receiving unit; 458: packet generation unit; 460: packet transmission unit; 462: table management unit; 480: correspondence table; 502: SID; 504: RAN IP prefix; 506: gNB address; 508: SID; 512: SID; 514: RAN IP prefix; 516: gNB address; 518: SID; 1200: computer; 1210: host controller; 1212: CPU; 1214: RAM; 1216: graphics controller; 1218: display device; 1220: input/output controller; 1222: communication interface; 1224: storage device; 1230: ROM; 1240: input/output chip.

## Claims

1. A communication system comprising:
a first router; and
a second router, wherein
the first router has
a table storage unit which stores a correspondence table of an IP prefix of a network under the first router and an SRv6 SID that corresponds to the IP prefix and that has a Locator+Function length shorter than an IP prefix length,
the second router has
an SID generation unit which generates an SID including a part of an address of a destination located under the first router, and header information of a packet that is transmitted to the destination, and
a packet transmission unit which transmits, to the first router, an SRv6 packet including the SID generated by the SID generation unit, and
the first router has a packet generation unit which refers to the correspondence table and identifies an IP prefix corresponding to the SID included in the SRv6 packet, when the SRv6 packet is received from the second router, and identifies the address of the destination by using the IP prefix that is identified and a part of the address of the destination included in the SID, to generate a packet that is transmitted to the destination by using the address that is identified and the header information included in the SID.

2. The communication system according to claim 1, wherein
the first router is a PE router which converts a SRv6 packet compliant with SRv6 into a GTP-U packet compliant with GTP-U,
the table storage unit stores the correspondence table of an IP prefix of an RAN under the first router and the SRv6 SID,
the second router has a route information receiving unit which receives a UE route information that is advertised by a controller and that includes a gNB address of a gNB to which a UE is connected,
the SID generation unit generates the SID including a part of the gNB address, and the header information, and
the packet generation unit identifies the gNB address by using the IP prefix corresponding to the SID included in the SRv6 packet, and a part of the gNB address included in the SID, and generates a GTP-U packet that is transmitted to the gNB by using the gNB address that is identified and the header information.

3. The communication system according to claim 2, wherein
The SID generation unit generates the SID including a part of the gNB address, and the header information that includes a TEID, a QFI, and an RQI and that is included in the UE route information, and
the packet generation unit generates the GTP-U packet by using the gNB address that is identified, and the TEID, the QFI, and the RQI that are included in the header information.

4. The communication system according to claim 3, wherein
the first router has an advertisement unit which advertises an ISD (Interwork Segment Discovery) route,
the ISD route indicates GTP6.E.Reduced as an SID Behavior in a BGP attribute that stores an SRv6 SID, and when an actual RAN IP prefix length including the IP prefix of the RAN under the first router, the IP prefix corresponding to the SID, is shorter than the SID Locator+Function length by less than an Arg.Mob.Session length, the second router stores, in NLRI, an IP prefix that has a same length as a sum of the Locator+Function length of the SID and the Arg.Mob.Session length and that includes a stuffing field for embedding an Arg.Mob.Session in the SID,
when the gNB address included in the UE route information is included in an IP prefix that includes the stuffing field and that is stored in the NLRI of the ISD route received from the first router, and a Behavior of the SRv6 SID indicates GTP6.E.Reduced, the SID generation unit stores, in an Argument field in the SID, the Arg.Mob.Session composed of the header information that includes the TEID, the QFI, and the RQI and that is included in the UE route information, and stores, in remaining Argument bits, a value of the gNB address at same bit positions as those of the remaining bits, to generate the SID, and
when the SRv6 packet having a GTP6.E.Reduced SID as an active SID is received, the packet generation unit acquires the Arg.Mob.Session from the SID, and identifies the gNB address from the IP prefix including the stuffing field and the value of the gNB address at the same bit positions as those of the remaining bits, to acquire the TEID, the QFI, and the RQI from the Arg.Mob.Session.

5. The communication system according to claim 4, wherein
the first router includes a table management unit which deletes a pair of an RAN IP Prefix and the corresponding SRv6 SID from the correspondence table, when a route having a destination prefix that includes the RAN IP Prefix having a stuffing field for embedding an Arg.Mob.Session is lost from a VRF connected to the gNB, or when reachability to the IP Prefix is lost, and
when the pair of the RAN IP Prefix and the corresponding SRv6 SID is deleted from the correspondence table, the advertisement unit issues a route withdrawal advertisement of an ISD route having the RAN IP Prefix in the NLRI.

6. The communication system according to any one of claims 2 to 5, wherein
the first router further includes a table registration unit which uses configuration information for specifying one or more destination prefixes from route information registered in a VRF connected to the gNB, and a Locator+Function length of a SRv6 SID set in the first router, and automatically generates, as IP prefixes that are registered in the correspondence table, one or more IP prefixes longer than the Locator+Function length of the SRv6 SID by an Arg.Mob.Session length, to automatically generate the SRv6 SID corresponding to each automatically generated IP prefix, for registering in the correspondence table.

7. The communication system according to any one of claims 2 to 6, further comprising the controller.

8. A router comprising:
a table storage unit which stores a correspondence table of an IP prefix of a network under the router and an SRv6 SID that corresponds to the IP prefix and that has a Locator+Function length shorter than an IP prefix length; and
a packet generation unit which refers to the correspondence table when an SRv6 packet is received from another router, the SRv6 packet including an SID including a part of an address of a destination located under the router, and header information of a packet that is transmitted to the destination, and identifies the address of the destination by using an IP prefix corresponding to the SID included in the SRv6 packet and a part of the address of the destination included in the SID, to generate a packet that is transmitted to the destination by using the address that is identified and the header information included in the SID.

9. A program for causing a computer to function as the router according to claim 8.

10. A communication management method which is executed by a router, the communication management method comprising:
storing, in a table storage unit, a correspondence table of an IP prefix of a network under the router and an SRv6 SID that corresponds to the IP prefix and that has a Locator+Function length shorter than an IP prefix length; and
performing packet generation by referring to the correspondence table when an SRv6 packet is received from another router, the SRv6 packet including an SID including a part of an address of a destination located under the router, and header information of a packet that is transmitted to the destination, and identifying the address of the destination by using an IP prefix corresponding to the SID included in the SRv6 packet and a part of the address of the destination included in the SID, to generate a packet that is transmitted to the destination by using the address that is identified and the header information included in the SID.
